Europäisches Patentamt

(19) European Patent Office

Office européen des brevets

(11) Publication number : **0 323 878 B1**

(12) **EUROPEAN PATENT SPECIFICATION**

(45) Date of publication of patent specification :
**15.07.92 Bulletin 92/29**

(51) Int. Cl.⁵ : **G05B 19/10**

(21) Application number : **89200571.1**

(22) Date of filing : **09.09.83**

(54) **Dynamically interactive control system.**

(30) Priority : **17.09.82 US 419632**

(43) Date of publication of application :
**12.07.89 Bulletin 89/28**

(45) Publication of the grant of the patent :
**15.07.92 Bulletin 92/29**

(84) Designated Contracting States :
**CH DE FR GB LI**

(56) References cited :
**FR-A- 2 381 353**
**FR-A- 2 489 012**
**FR-A- 2 489 020**
**FR-A- 2 505 707**
**GB-A- 2 001 467**
**GB-A- 2 120 815**
**US-A- 4 520 300**

(60) Publication number of the earlier application in
accordance with Art. 76 EPC : **0 111 992**

(73) Proprietor : **AMPEX CORPORATION**
**401 Broadway M.S. 3-35**
**Redwood City California 94063-3199 (US)**

(72) Inventor : **Williams, Marshall**
**35900 Turpin Way**
**Fremont California (US)**

(74) Representative : **Horton, Andrew Robert Grant**
**et al**
**BOWLES HORTON Felden House Dower Mews**
**High Street**
**Berkhamsted Hertfordshire HP4 2BL (GB)**

EP 0 323 878 B1

Jouve, 18, rue Saint-Denis, 75001 PARIS

## Description

BACKGROUND TO THE INVENTION

This invention relates generally to the field of controls and control systems for use with controlled systems or other utilization devices, and more particularly to such controls and control systems wherein an information signal is generated responsive to movement of a moveable element and which movement is productive of an associated interactive tactually perceivable response.

Broadly speaking, controllable apparatus or more generally utilization devices have long required the capability to interact with a managing element in connection with the operation performed by the managing element. This interfacing capability has required the flow of information in both directions: as status indications from the controllable apparatus or utilization device to the managing element, generally hereinafter referred to as an output operation; and conversely from the managing element to the controllable apparatus, generally hereinafter referred to as an input operation. In the following discussion, "input" and "output" are used with reference to the electrical system.

In dealing with controllable apparatus the managing element can take numerous forms. Frequently the managing element is a human operator who reacts accordingly to status indications from the controllable apparatus. However managing elements can assume other forms, such as automated systems including electro-mechanically conIn this implements for effecting operations with respect to one or more selected parameters of movement. This application, "operator" is used to mean any managing element, such as a human operator or electro-mechanically controlled implement or the like, that interacts with the controllable apparatus. Such systems of necessity must include an interface between the controllable apparatus and the operator which permits the efficient flow of information in both input and output operations. In the broad area of input operation, this frequently includes a displacement device having a moveable portion with a parameter of movement associated therewith. Such parameters of movement can include physical motion of either a translatory or rotational nature, e.g., the translatory or rotational movement of a single or multiple position switch, potentiometer, etc. Likewise, in the broad area of output operations, efficient flow of information requires that the information from the controllable apparatus be in a format perceivable by the operator. The formatting of such information often involves a plurality of relations involving the visual, auditory or tactile senses.

As technology has continued to expand, controlled systems have likewise continued to expand in complexity, sophistication, and the scope of the general work or task implemented or controlled. Simultaneously with the growth in the sophistication of the controlled system has been a corresponding increase in the associated quantity of input and output information. For human operators of such systems, this has often resulted in an enormous collection of switches, knobs and indicating devices with which to deal, each frequently dedicated to control a unique parameter of the controlled system. As the basic requirement underlying all such arrays of switches, knobs and indicating devices is the bi-directional flow of information between an operator and the controlled system, a problem is often encountered. This problem relates particularly to the human limitation that only a finite amount of information can be effectively dealt with at any one time. This includes not only the basic information which may be flowing in either an input or output sense, but also the human requirement that certain physical parameters such as switch or indicator location on a panel as well as the corresponding information associated therewith must be simultaneously considered by the operator for an intelligent, desired operation to result. This requirement is particularly significant in areas where the associated desired operator response is either a rapid one or one of a creative nature.

Such requirements have frequently resulted in multifunctional inputs or outputs devices, such as switches or knobs whose functions can be changed in a dynamic manner in response to changing requirements, or indicating devices such as cathode ray tubes on which the display thereon can be quickly changed. In terms of the art, such devices are referred to as "soft", e.g., soft switches, to indicate that the associated functions can be changed at will.

A particular example of multifunctional use of a push button is observed with the so called "soft keys" which are frequently encountered on the typewriter type keyboard generally found with a computer terminal. The function of such keyboard keys can be generally assigned to any of a multitude of functions depending upon the particular application; such functions can thereafter be changed as easily as entering new data on the computer terminal.

While switches involving translatory motion whose functions can be changed at will are well known and widely used, input devices involving rotational motion whose function can be easily changed have not seemed to have found equal wide spread use.

With the growth of the use of microprocessors, digital processing of information is becoming increasingly widespread. Applications previously considered as distinctly analog in nature are now being processed in a digital manner, with the corresponding use of analog-to-digital converters to transform the analog information of interest to a digital format for the requisite digital processing, and the subsequent conversion of the results, in a digital format back to an analog format, for interaction with the particular environment. In such an environment where information is converted from a continuous analog nature to a discrete digital nature, it is desirable for input devices from the external world to provide information directly in a digital rather than analog format. Input devices capable of providing basic input information in a digital or binary form frequently represent translatory physical motion, such as the depressing of a switch or key. The corresponding output generally assumes one of the well known conventional forms susceptible to perception by the operator's visual or auditory sense.

In comparison with input devices involving translatory motion, there has been relatively few input devices involving rotational motion available. In the past, such devices were frequently limited to potentiometers which directly produced an output in an analog format. Consequently in using such a device for input purposes, a number of problems were present. To effectively use the output in an analog format, an analog-to-digital conversion process is essential. An additional problem relates to the fact that the analog signal produced is unalterably associated with a fixed angular positon; i.e., if a potentiometer were going to be used as an input device, the angular reference point, e.g., the zero reference position, always remains at the same angular position. This severely limits the usefulness of the device as an input means to a digital system.

A solution to the problem present by the nature of the output signal produced by a potentiometer is afforded by the use of a tachometer. In particular, a slotted disc is attached to a rotatable shaft, with a light source positioned on one side of the slotted disc, and a light sensing means positioned on the opposite side of the disc, in alignment with the light source. Consequently, as the shaft is rotated, the beam of the light is interrupted by the rotating disc, thereby producing an output signal, usually of binary nature. By appropriate decoding means both the amount of rotation as well as speed of rotation are ascertainable. It is further observed that by use of a second set of slots on the disc, distinct and separate from the first set, but displaced from the first set by an appropriate amount along with a second light sensing means and an optional second light source, information indicative of direction of rotation of the shaft is also produced.

In particular, an input device incorporating a tachometer, while being able to provide input information, still suffers from a number of shortcomings. In particular, such an input device, while being capable of providing information based upon rotational motion, would generally lack end stops, i.e., means to limit the extremities of angular rotation.

Likewise, such an input device would lack detents at selected angular positions. This feature, which is commonly found on analog potentiometers, is often quite useful in either presetting the input device to a known value or use as a reference point in the operation of the knob. However, by so providing fixed detents on the above described input device, a similar limitation in the versatility results.

Furthermore, such an input device as above described incorporating a knob coupled to a tachometer by a shaft would have a fixed rotational friction or drag associated with rotation. In analog potentiometers, the amound of drag is frequently mechanically selectable, depending upon the particular device selected and the manner in which it is physically mounted. Such flexibility is clearly lacking in the above described input device. However, rotational friction or drag could be effected by mechanical adjustments on the shaft coupling the knob to the tachometer, or by other means, such would again limit the versatility of resulting device.

## SUMMARY OF THE INVENTION AS CLAIMED

GB-A-207 3887 discloses features corresponding to those set forth in the precharacterising portion of the broadest claim.

The invention provides apparatus for the input of information from a displaceable device to a controlled system and for the production of information in a tactile form in response to displacement of said device, comprising means for translating information from the displaceable device into signals in a format suitable for communication to the controlled system; and control means responsive to said signals to produce a control signal for the control of an operating parameter of the system and an output signal which varies according to the position of the device, characterised by electromagnetic means responsive to the output signal for simulating the effect of end stops which determine the limits of displacement of the said device, the electromagnetic means being responsive to the output signal to produce resistance to the displacement of the device in a range between the said limits.

Preferably the electromagnetic means is operable to produce a tactile indication of at least one detent for a position of the device between the said limits.

The electromagnetic means may be arranged to provide greater resistance for one direction of displacement of the device than for an opposite direction of movement thereof.

## DESCRIPTION OF FIGURES

FIGURE 1 illustrates in a block diagram form the basic operation and the interactions in a soft knob with tactile feedback.

FIGURE 2 illustrates an optical tachometer.

FIGURE 3 illustrates the waveforms produced in the operation of the optical tachometer illustrated in FIGURE 2.

FIGURE 4 illustrates a circuit for the decoding of rate and direction information from the signals produced by the optical tachometer illustrated in FIGURE 2.

FIGURE 5 illustrates waveforms associated with the operation of the circuit illustrated in FIGURE 4.

FIGURE 6 illustrates a particle brake.

FIGURE 7 illustrates a hardware implementation of a soft knob with tactile feedback.

FIGURE 8 illustrates a hardware implementation of a soft knob with tactile feedback employing a microprocessor.

FIGURE 9 illustrates in a flow chart format a program which could be used in the hardware implementation illustrated in FIGURE 8.

DETAILED DESCRIPTION

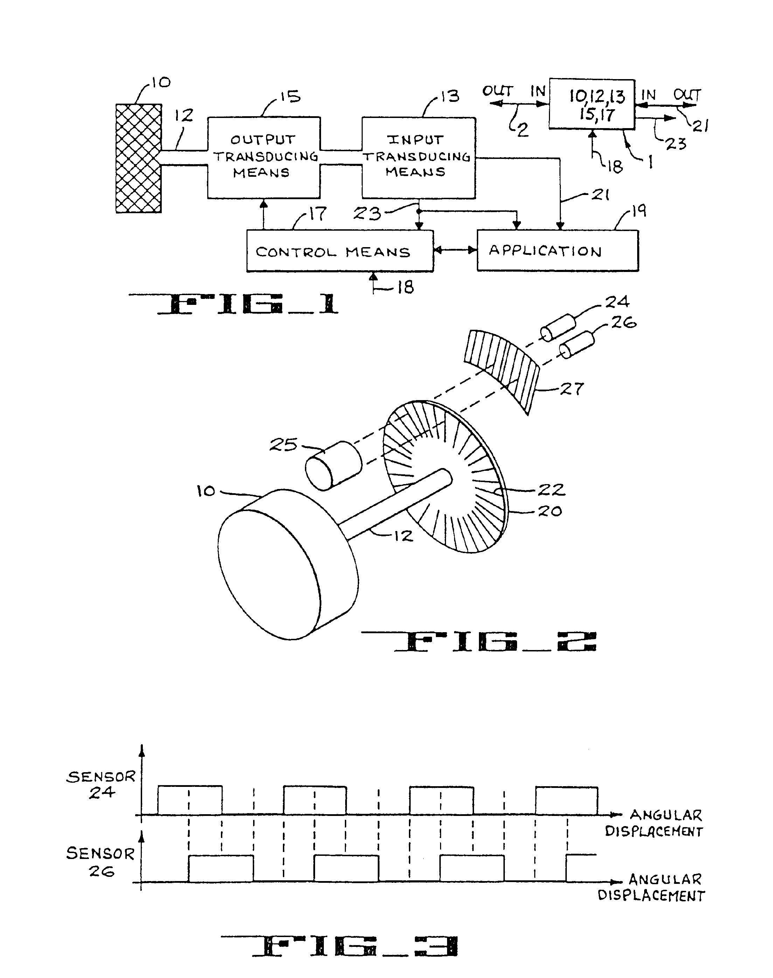

A transducer 1 in accordance with the present invention is illustrated generally in the two diagrams of FIGURE 1 and is seen to be capable of uni-directional and bi-directional flows of information relative to an operator of the transducer. Moreover, as will be apparent upon consideration of the following description of various preferred embodiments of the transducer 1, said flows of information are selectable. The transducer 1 of the present invention is capable of providing the bi-directional flow of information between an operator and the transducer (or of only providing information to the operator) through operator/transducer interaction means 2, the bi-directional flow of information between the transducer and the associated electrical system over a communication link 21, the uni-directional flow of information from the transducer to the electrical system over the link 21 or a separate communication link 23, and the uni-directional flow of information from an external source to the transducer over another communication link 18.

A particularly salient feature of this invention is associated with the aforementioned operator/transducer interaction means 2 that is capable of providing information flow to the associated electrical system and the selectively bi-directional flow of information to the operator in a tactually perceivable form. The transducer advantageously provides the ability for the operator to input information to the transducer 1 and receive outputs from the transducer 1 so that, if desired, appropriate responses can be executed. Knob 10 functions as the direct operator interface, for both the input and output of information with reference to an electrical system, generally indicated in FIGURE 1 as application 19. Mounted for rotation with knob 10 on a common shaft 12 is an input transducer means 13 for the input of information to control means 17, and output transducer means 15 for the output of information from control means 17 to an operator in a format perceivable by the tactile sense. Control means 17 functions to receive input information from input transducer means 13 and to communicate such information to application 19. Control means 17 likewise functions in response to information from input transducer means 13 and application 19 to control the transmission of output information to output transducer means 15 for further transfer through shaft 12 and knob 10 to a human operator by communication through the tactile sense.

It should be understood that application 19 represents in general any electrical system with which it is desirable to interface information. It should also be clear that control means 17 could likewise receive information 18 from an external source unrelated to application 19. In a similar manner it should be clear that input transducing means 13 could communicate directly by a signal on line 21 to application 19, or simultaneously with control means 17 and application 19 by a signal on line 23. Likewise control means 17 could communicate directly with application 19 independently of the signal on line 23 from input transducing means 13.

Several features of the dynamically interactive responsive control device and system in accordance with the present invention should be clear. The movement associated with the input of information does not have a restoring force associated therewith. In particular, when motion associated with the input of information occurs, the portion of the input device remains stationary in the final position in which it is positioned. In addition, the resistance to motion can be independently controlled, and in particular does not have to be referenced to position or displacement.

In the preferred embodiment, input transducer means 13 is implemented using a optical tachometer.

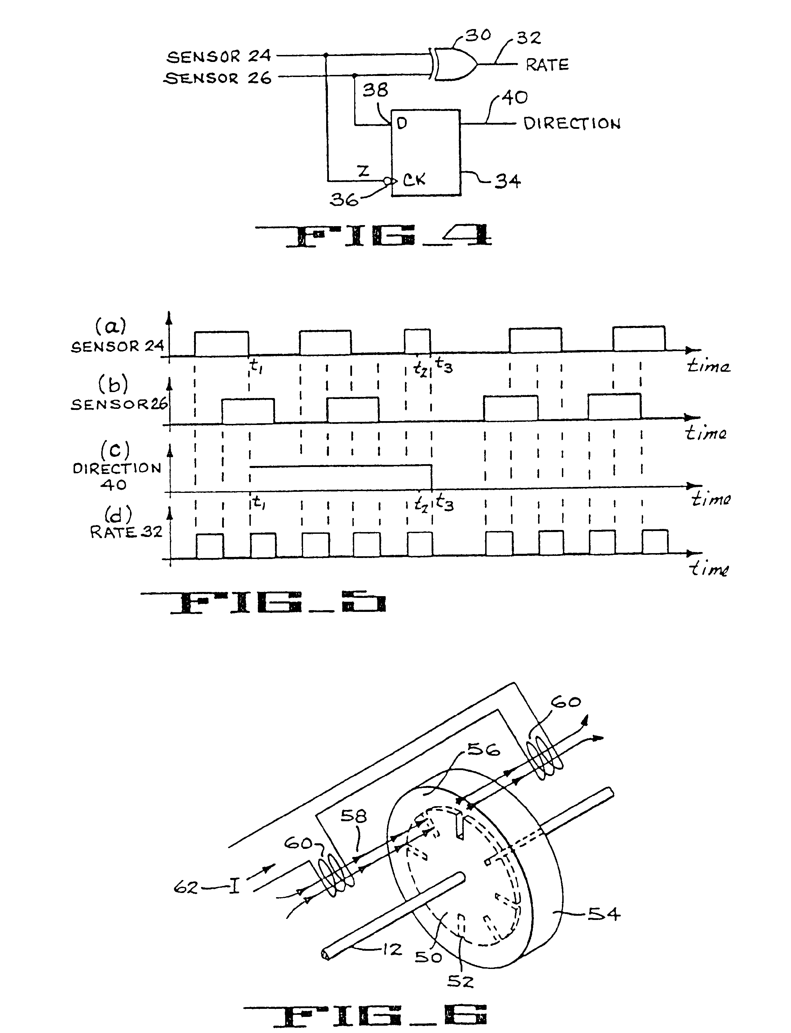

Referring to FIGURE 2, upon rotation of knob 10, shaft 12 will rotate. Coupled to shaft 12 is a disc 20 having optical gradations 22 which permit the passage of light from source 25 therethrough. A second set of gradations is present on plate 27. Rotation of disc 20 results in an optical interference pattern in the light energy falling on sensors 24 and 26 due to the relative motion between the gradations 22 on disc 20 and those present on plate 27. In particular, the pattern results in the production of respective waveforms by sensors 24 and 26 having a quadrature relationship, as illustrated in FIGURE 3. The manner in which the gradations are placed on disc 20 and plate 27 to produce the waveforms illustrated in FIGURE 3 is well known to those skilled in the art.

A circuit for the decoding of the waveforms produced by sensor 24 and 26 in response to rotation of knob 10 is shown in FIGURE 4.

Input signals from sensors 24 and 26 are supplied as inputs to EXCLUSIVE-OR gate 30 whose output on the line 32 is a sequence of pulses proportional to the angular displacement of shaft 12; the rate of the pulses is proportional to the angular velocity of shaft 12. Flip-flop 34 is a D-type flip-flop. The output from sensor 24 is supplied to the clock input 36 and the output from sensor 26 is supplied to the D input 38 of flip-flop 34. Consequently, upon every high-to-low transition occuring on the output signal from sensor 24, the direction output on the line 40 from flip-flop 34 will assume the corresponding state of the output from sensor 26.

The operation of the circuit illustrated in FIGURE 4 can be further understood by reference to the waveforms illustrated in FIGURE 5. FIGURES 5(a) and 5(b) illustrate the output waveforms from sensor 24 and 26 respectively in response to rotation of disc 20 (FIGURE 2). FIGURE 5(c) illustrates the corresponding output on the line 40 from flip-flop 34. FIGURE 5(d) illustrates the corresponding output on the line 32 from EXCLUSIVE-OR gate 30.

As knob 10 (FIGURE 2) is rotated in a first direction, the outputs produced by sensors 24 and 26 will be as illustrated in FIGURE 5(a) and 5(b). At time $t_1$, the high-to-low transition occurring on the output of sensor 24 will result in the state of flip-flop 34 assuming the current state of the signal from sensor 26 (FIGURE 5(b)). Consequently, the direction output on line 40 from flip-flip 34 will assume a high state, as illustrated in FIGURE 5(c).

For the purpose of illustration, assume that a change in the direction of rotation of the knob 10 occurs at time $t_2$. The change in the direction of rotation of knob 10 will be detected by the circuit of FIGURE 4 at time $t_3$, when the signal from sensor 24 changes from a high to a low state. At the occurrence of the high to low transition of the output from sensor 24 at time $t_3$, flip-flop 34 will once again assume the state of the output from sensor 26. Due to the change in direction of rotation of the knob 10, the corresponding state of the output from sensor 26 at time $t_3$ will be low. Consequently, the output on the line on the line 40 from flip-flop 34 will assume a low state. From observing FIGURE 5(c), it is clear that in the simple circuit of FIGURE 4, the output on the line 40 of flip-flop 34 is indicative of the direction of rotation of the knob 10. FIGURE 5(d) illustrates the corresponding output on the line 32 from EXCLUSIVE-OR gate 30.

Consequently, it is clear that by the use of a tachometer coupled to a shaft, rotational motion can directly produce information in a binary format. In particular, direction of rotation, angular displacement and angular speed are all easily obtainable.

In the preferred embodiment a Two Channel Incremental Optical Encoder manufactured by Hewlett Packard, series HEDS-5000 is used to implement the above described tachometer; such a tachometer is more fully described in Hewlett Packard 28mm DIAMETER TWO CHANNEL INCREMENTAL OPTICAL ENCODER KIT tentative data sheet January 1981, number 5953-0469 (1/81).

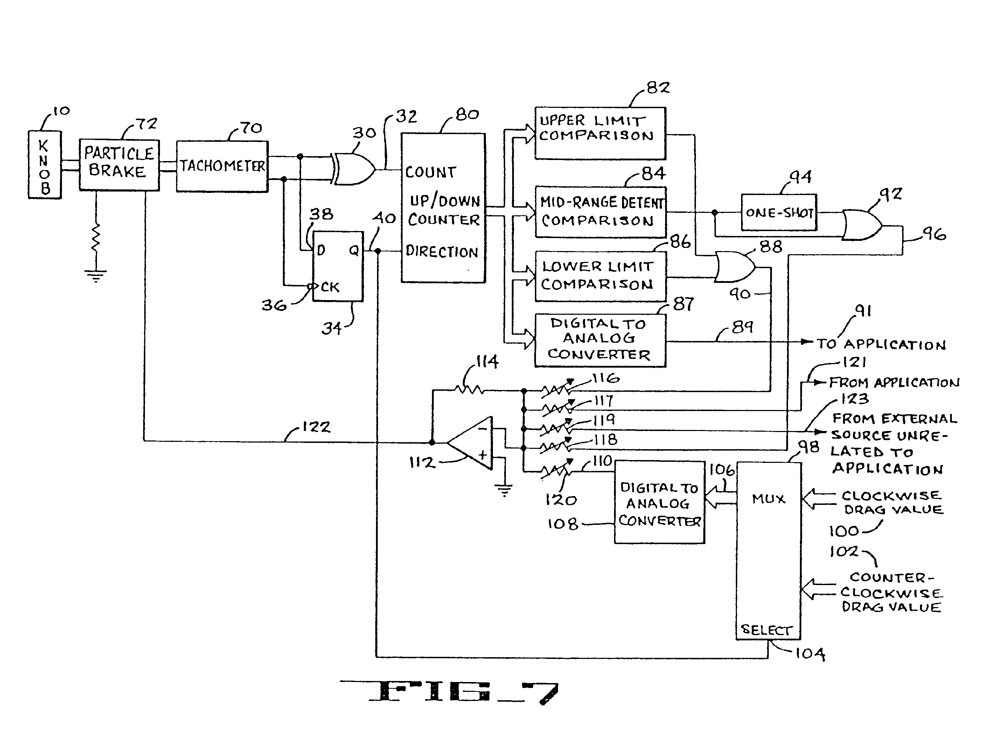

In this embodiment, output transducer means 15 (FIGURE 1) is implemented using a particle brake, best illustrated in FIGURE 6. Affixed to the shaft 12 is a disc 50 having a plurality of slots 52. Disc 50 is constructed of non-magnetic material, and is completely enclosed in a non-magnetic housing 54 which is filled with magnetic particles 56 in a powder form. Magnetic flux 58 produced by coil 60 in response to current I(62) has a path normal to the surface of disc 50 and in alignment with a portion of the locus of positions occupied by slots 52. In response to application of a current I(62) to coil 60, a magnetic flux 58 is produced in direct proportion to the magnitude of current I applied to coil 60. In response to the magnetic flux 58, the magnetic particles 56 bind together along the lines of magnetic flux 58. The strength of the resulting link is directly proportional to the magnetic flux as determined by current I. Consequently, rotation of shaft 10 can be restricted by the creation of drag resulting from the application of the current I.

A particle brake as above described is commercially available from DANA INDUSTRIAL under the trademark SOFSTEP; such a brake is more fully described in DANA INDUSTRIAL Simplatrol catalog S-1100.

By controlling the current to the particle brake, a number of different tactile responses can be achieved.

By passing a continuous current through coil 60, a rotational friction or drag effect can be obtained. In particular, the drag produced is directly proportional to the current passed through coil 62. Consequently, the drag produced can be easily adjusted according to varying requirements of different applications.

Whereas the amount of drag associated with rotation motion of potentiometers in the past was constant, various new and distinct programmable tactile responses are easily available in accordance with the present invention. Broadly speaking, by varying the amount of current through coil 60, the amount of drag produced can vary in any desired relation to angular position, angular velocity, direction of rotation, or any parameter or condition of interest. By way of example, in a complex process control application wherein the present invention is used to control a critical parameter, the existence of an undesirable condition resulting either from parameter adjustment (or other unrelated causes) can be easily communicated to the human operator by an increase in the amount of drag.

In a similar fashion, by appropriate use of angular position information from input transducer means 13, and controlling the current through coil 60 in response thereto, limits can easily by placed on the amount of permissible angular rotation, i.e., an end stop could be simulated at any desired angular location.

Likewise, by appropriate adjustment of the magnitude of the current passed through coil 60 in response to angular position information from input transducer means 13, the relative angular location of points of interest can be easily communicated to the human operator, i.e., detents can be placed at any desired angular positions.

Consequently, it is clear that the combination of a knob, particle brake and tachometer coupled by a common shaft, with the operation of the particle brake controlled by a control means in response to information from the tachometer, provides a soft knob with tactile feedback having extremely versatile characteristics and a broad range of application, limited only by the sophistication of the control means.

FIGURE 7 illustrates an embodiment of the invention in an application having programmable clockwise and counter clockwise end of rotation stops, a programmable detent, and a different amount of drag associated with each direction of rotation, providing an analog control output to control an associated electrical system, as well as having the ability to provide a tactile indication of information either from the system or from an external source.

A rate signal on line 32 and a direction signal on line 40 are supplied to the respective count and direction inputs of up/down counter 80. In response to direction signal on line 40 up/down counter 80 will, in response to the rate signal on line 32, count in either a numerically increasing or decreasing sequence. Consequently the numeric value of the count present in up/down counter 80 will correspond to the angular position of knob 10.

The output from up/down counter 80 is supplied to an upper limit comparison means 82, a mid-range detent means 84, a lower limit comparison means 86 and a digital to analog converter 87.

The output on line 89 from the digital to analog converter 87 is an analog signal proportional to the angular position of knob 10, and would be used to control the particular system application 91 of interest where a control voltage in an analog format may be desired. However, it is clear that a corresponding digital control signal is available directly from the output from the up/down counter 80 for applications requiring such.

Upper limit comparison means 82, mid-range detent means 84 and lower limit comparison means 86 function to compare the numeric value of the digital output signal from up/down coutner 80 with pre-selected numeric values which can be defined depending upon the particular application, e.g., such as by thumbwheel switch settings.

The respective outputs from upper limit comparison means 82, mid-range detent means 84 and lower limit comparison means 86 become 'true' when the count present in up/down counter 80 equals the respective numeric values pre-set in upper limit comparison means 82, mid-range detent means 84 and lower limit comparison means 86.

The outputs from upper limit comparison means 82 and lower limit comparison means 86 are both supplied as inputs to OR gate 88. Consequently, the output on line 90 from OR gate 88 becomes 'true' when the value present in up/down counter 80 equals either of the respective pre-defined values in upper limit comparison means 82 or lower limit comparison means 86, i.e., when the angular position of knob 10 corresponds to one of the pre-defined limits for angular rotation.

Due to the inductance associated with coil 60 of particle brake 72, there is associated with the production of magnetic flux 58 a time constant determined by the equivalent inductance and resistance presented by the associated electrical circuit, hereinafter referred to as the particle brake time constant. Consequently, for a perceivable tactile indication to occur in response to a current pulse, the duration of the current pulse must exceed a minimum time period determined by the above discussed time constant. This is particularly significant in situations wherein the angular velocity of knob 10 is such to result in the production from mid-range detent means 84 of a pulse having a duration less than the particle brake time constant. Employing a tachometer having a large number of slots 22 (FIGURE 2), and rotating knob 10 at a larger angular velocity create such a situation.

Consequently, the output from mid-range detent means 84 is simultaneously applied as one input to OR gate 92 and as a trigger input to one shot 94.

The period of the pulse produced by one shot 94 is adjusted such that it is greater than the above discussed particle brake time constant. The output from one shot 94 is applied as the second input to OR gate 92. Consequently, the output on line 96 from OR gate 92 is a signal, having a minimum duration greater than the particle brake time constant, indicative of agreement between the angular position of knob 10 and a predefined angular position at which a tactile response simulating a detent is desired.

The numeric values 100 and 102 present in a digital format to multiplexer 98 represent the respective desired amounts of drag to be presented to rotation of knob 10 in each direction. Multiplexer 98, in response to the binary state of the signal supplied to SELECT input 104, will supply either the clockwise drag value 100 or the counter clockwise drag value 102 as the respective output on lines 106 from multiplexer 98. As the direction signal on line 40 from flip-flop 34 is supplied to SELECT input 104 of multiplexer 98, the direction of rotation of knob 10 will consequently determine which of the two inputs to multiplexer 98 will be supplied as the output on lines 106.

The output on lines 106 from multiplexer 98 is supplied as an input to a digital to analog converter 108, whose output on line 110 is an analog signal proportional to the binary value of the digital signal supplied from multiplexer 98. Consequently, the resulting output signal on line 110 from digital to analog converter 108 is an analog signal respresentative of the amount of desired drag to be presented to rotation of knob 10.

Operational amplifier 112 and resistors 114, 116, 117, 118, 119 and 120 associated therewith form an analog voltage summing means whose output on line 122 is an analog voltage proportional to the algebraic sum of the respective input voltages, i.e., the voltage on line 90 from OR gate 88, an analog input voltage on line 121 from the application of interest, the output voltage on line 96 from OR gate 92, an analog input voltage on line 123 from an external source and the voltage on line 110 from digital to analog converter 108. Resistors 116, 117, 118, 119 and 120 are each individually adjustable and each determines the amount of amplification of the associated applied analog voltage. The resultant analog voltage output on line 122 is used to control the current I and hence the rotational friction or drag produced by particle brake 72.

As the magnitudes of each of the inputs to the analog summing circuit can be adjusted by adjusting the values of resistors 116, 117, 118, 119 and 120, the resulting rotational friction produced by upper or lower comparison means 82 or 86, mid-range detent means 84, the inputs on lines 121 or 123 from either the application of interest or from the external source unrelated to the application respectively and the directionally dependent drag represented by the output on line 110 from digital to analog converter 108 respectively, can be independently adjusted to produce the desired tactile response. In particular, as the value of resistor 116 will determine the amount of current supplied to particle brake 72 when the angular position of knob 10 equals one of the pre-defined limits of rotation, resistor 116 would be adjusted to simulate the desired tactile response indicative of an end stop. Likewise the value of resistor 117 will control the amount of rotational resistance produced in response to an input on line 121 from the application of interest. In a similar manner, the value of resistor 118 will determine the amount of rotational friction produced in response to the angular position of knob 10 equalling the pre-defined detent position. The value of resistor 119 will control the amount of rotational resistance produced in response to the input on line 123 from an external source unrelated to the application of interest. Likewise, the value of resistor 120 will determine the amount of continuous drag produced in response to clockwise or counter clockwise rotation as defined by clockwise drag value 100 and counter-clockwise drag value 102.

Consequently, FIGURE 7 illustrates one preferred embodiment of a soft knob having tactile feedback with pre-selectable end stops and a detent, as well as a continuous drag effect which is dependent upon the direction of rotation; this embodiment can further produce a tactile indication responsive to signals from both the system of interest as well as an external source unrelated to the system.

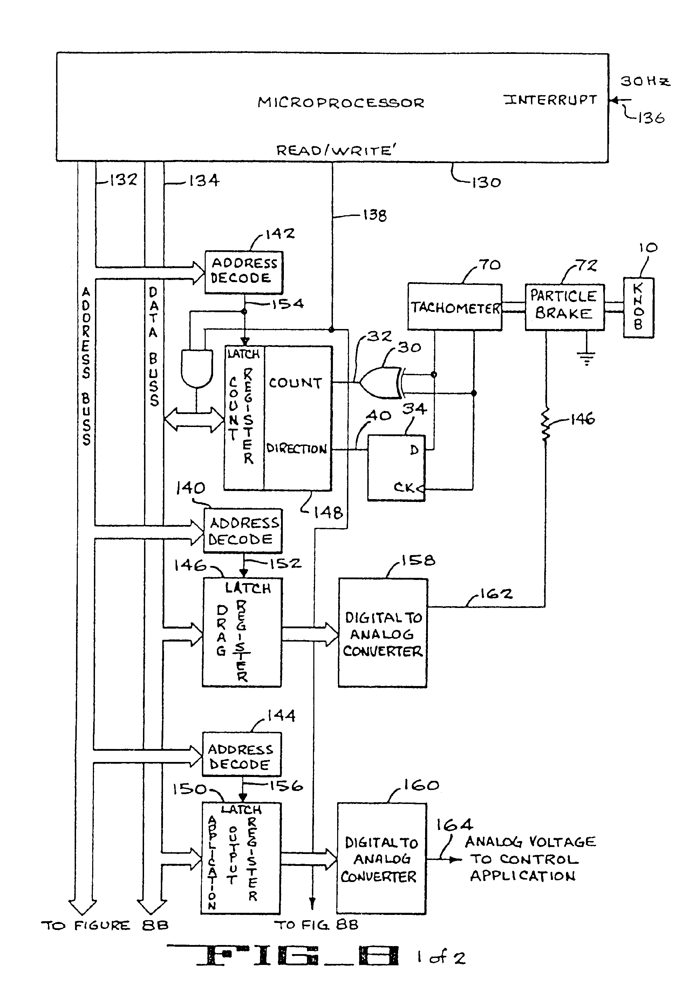

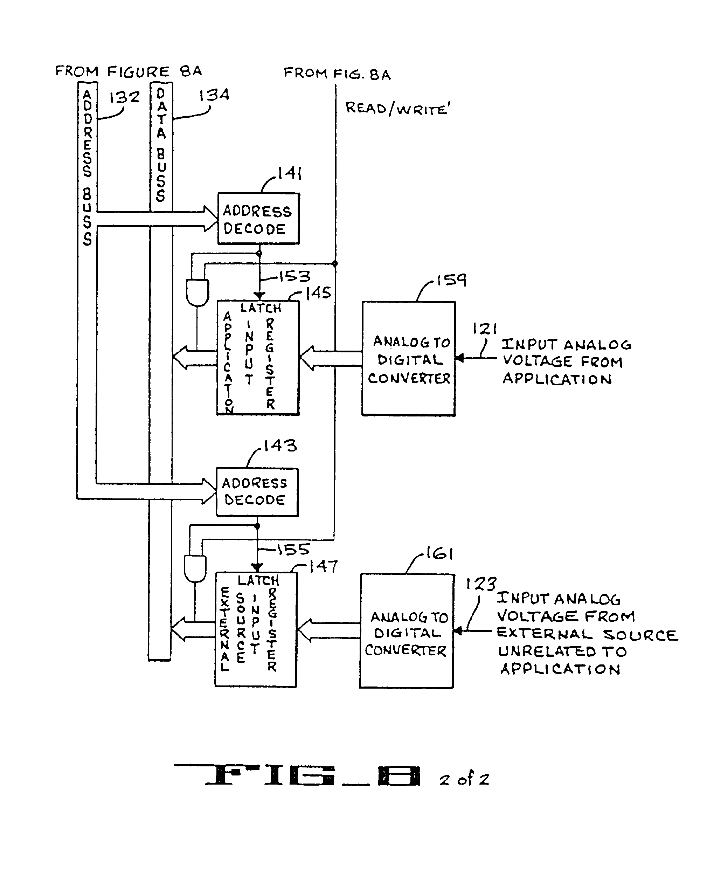

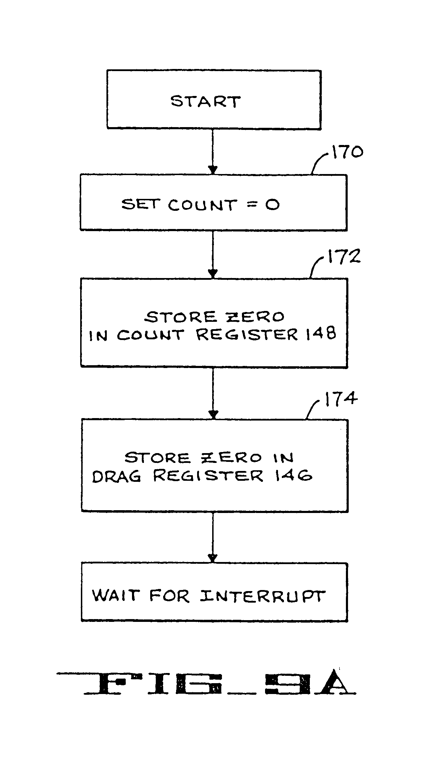

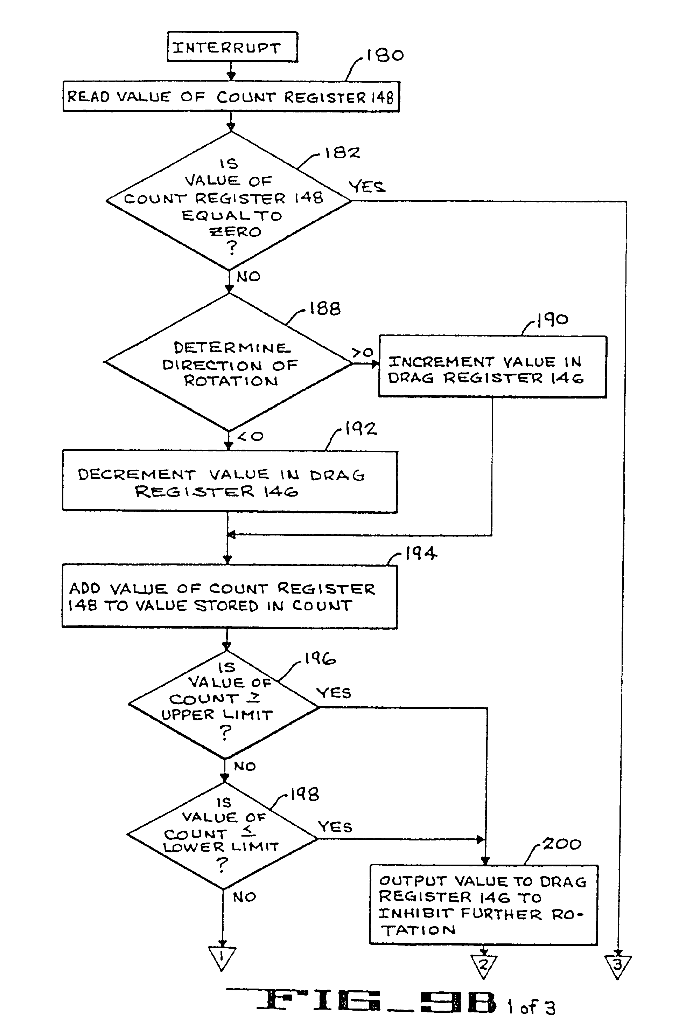

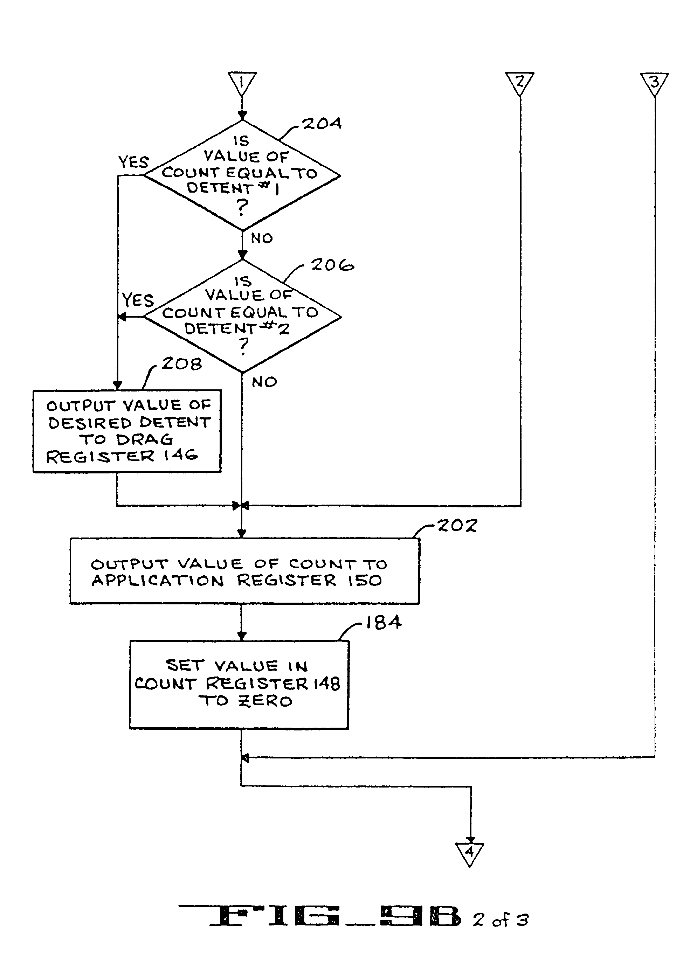

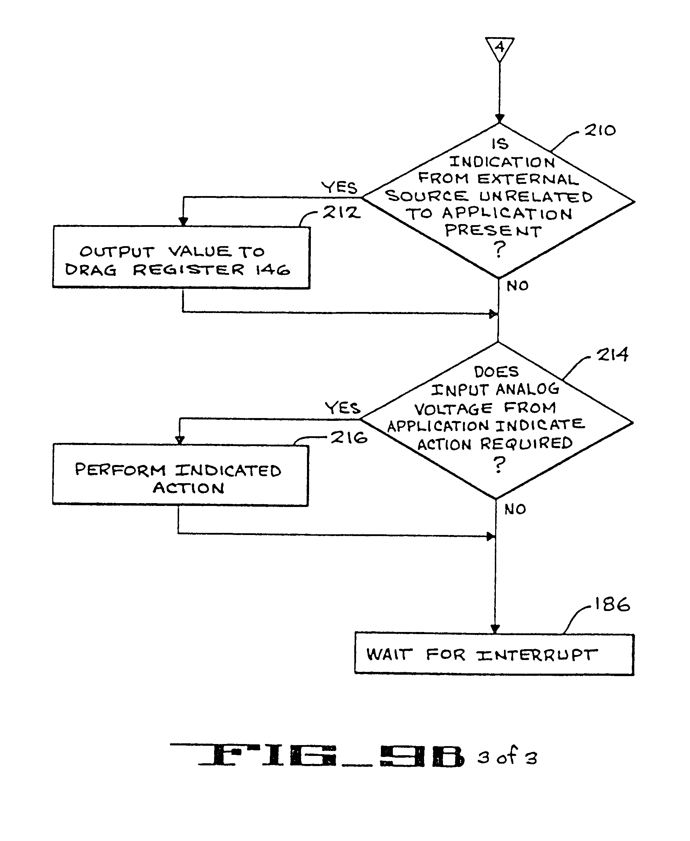

The versatility of the above described soft knob with tactile response can be greatly expanded through the use of a microprocessor and associated program. FIGURE 8 (constituted by FIGURES 8A and 8B) illustrates one possible embodiment of such a design. FIGURE 9 (constituted by FIGURES 9A to 9D) illustrates an example of a corresponding program in a flow diagram form.

For purposes of clarity of discussion, only the particular signals associated with a general microprocessor will be discussed as they relate to the particular embodiment illustrated in FIGURE 8. It is clear that other signals not relevant to the present discussion are necessary, as are further details relating to some of the signals which are discussed. These other and further details are not necessary to the understanding of the use of a microprocessor with a soft knob having tactile feedback, and would be well known to one with ordinary skill in the art.

Referring first to FIGURE 8, microprocessor 130 has associated therewith address bus 132, data bus 134, as well as interrupt input 136, and READ/WRITE output 138. Interrupt input 136 to microprocessor 130 serves to notify the microprocessor of the occurrence of external events so that appropriate actions can be taken. In the current embodiment, a 30 Hz signal is effectively supplied to interrupt input 136 to result in the regular, periodic execution by microprocessor 130 of a desired action, as more fully described hereinafter. READ/WRITE signal 138 serves to indicate the nature of the operation occurring with respect to data bus 134 and address bus 132, i.e., whether the current operation is the input of information to, or the output of information from microprocessor 130. Address decoders 140, 141, 142, 143 and 144 each are designed to recognize a unique pre-defined address associated with drag register 146, application input register 145, counter register 148, external source input register 147 and application output register 150, respectively. In response to the presence of an address value on address bus 132 equal to the predefined address of drag register 146, application input register 145, counter register 148, external source input register 147 or application output register 150, the corresponding respective enable signal on one of the lines 152, 153, 154, 155 or 156 will be produced. An enable signal on one of the lines 152, 154 or 156 functions to effect the transfer of the current numeric value present on data bus 134 to drag register 146, counter register 148 or application register 150 respectively. In a similar fashion, in response to the presence of the pre-defined address of counter register 148, application input register 145 or external source input register 147 the corresponding enable signal is provided on lines 154, 153 or 155. In response thereto and the presence of the desired state of READ/WRITE signal 138, the numeric value present in counter register 148, application input register 145 or external source input register 147 will be transferred to data bus 134. Digital to analog converters 158 and 160 function to convert the respective digital inputs from drag register 146 and application register 150 to corresponding analog voltages on lines 162 and 164 respectively. Analog voltage 162 functions to control the rotational resistance produced by particle brake 72, and analog voltage on line 164 is used in the particular application which is desired to be controlled by the rotation of knob 10. It is of course clear that a corresponding digital representation of the particular angular position of knob 10 is present in the output from application register 150, and could likewise be used in those applications requiring a control signal in a digital format. In a similar fashion, analog to digital converters 159 and 161 function to convert the input analog voltage received from the external source over the line 123 to corresponding digital values for subsequent transfer to data bus 134.

Count register 148 is a 8-bit presettable up/down counter. The direction of counting is determined by the state of the direction signal on line 40 and, in response thereto, counter register 148 will either increment or decrement the current value of the count therein upon the occurrence of each rate pulse on line 32. The value present in count register 148 can be pre-set in response to the presence of the appropriate address on address bus 132 to produce an enable signal on line 154 to result in the transfer of the current value of the digital signal present on data bus 134 to count register 148. Thereafter that value will be either incremented or decremented in response to the direction signal on line 40 and the rate signal on line 32. In a similar fashion microprocessor 130 can read the value present in count register 148 by the specifying of the pre-defined address associated with address decoder 142, which will result in the contents of counter register 148 being transferred to data bus 134.

Consequently, it is possible for microprocessor 130 to control several operations. In particular, microprocessor 130 can dynamically change the drag or rotational resistance presented to the rotation of knob 10 by controlling the current supplied to particle brake 72 through the use of drag register 146 and digital to analog converter 158.

In a similar fashion, microprocessor 130 can provide a control signal in a digital format from the output of application output register 150 for control of applications requiring a control signal in a digital format, or can provide a control signal in an analog format from the output of digital to analog converter 160 for control of applications requiring a control signal in an analog format.

In connection with counter register 148, various operations are possible. Microprocessor 130 can either store a digital value in counter register 148 or read the current value of the contents of counter register 148.

In a similar format, microprocessor 130 could receive input information from either the application of interest, or from an unrelated source, as illustrated by analog input signals on the lines 121 and 123. It is of course clear that while signals on lines 121 and 123 have been described as in an analog format, the format of said signals could be digital.

Using the hardware configurations illustrated in FIGURE 8, the versatility of the soft knob with tactile feedback is greatly extended. FIGURE 9 illustrates in a flow chart form a program which would provide programmable end stops to the angular rotation of knob 10 detents, drag on the rotation of knob 10 which is both direction and angular positon dependent, and response to input information from both the application of interest and a second unrelated application.

FIGURE 9(A) illustrates an initialization routine, and FIGURE 9(B) the main body of the control program.

Referring first to FIGURE 9(A) the microprocessor initially stores a zero value in a location called COUNT, indicated by step 170. Location COUNT is used for temporary storage of a value which is frequently compared with the contents of count register 148 to determine the occurrence of various events in connection with the rotation of knob 10, as will be more fully described hereinafter. Thereafter, steps 172 and 174 are executed to set the contents of count register 148 and drag register 146 to zero. Thereafter, the microprocessor executes the general control routine illustrated in FIGURE 9(B) in response to the receipt of an interrupt, which in the preferred embodiment occurs at regular times each one-thirtieth of a second from the next.

Referring to FIGURE 9(B), in response to the receipt of an interrupt, microprocessor 130 first reads the value present in count register 148 in executing step 180, and determines if the number so read is equal to zero in 182 or a positive or a negative number in step 188. If knob 10 has been rotated in one direction, the value in count register 148 will be a positive number. Conversely, if knob 10 has been rotated in the opposite direction, the value present in count register 148 will be a negative number. Consequently the algebraic sign of the number found in count register 148 will indicate the direction in which knob 10 has been rotated.

If the value found in count register 148 (step 182) is zero, this would indicate that the angular position of knob 10 has not changed since the last time it was checked by microprocessor 130, as the last task done in the general processing routine in executing step 184 is the setting of the value in count register 148 to zero. Consequently, if the value found in count register 148 in step 180 is zero, microprocessor goes to step 210 as further discussed hereinafter.

In this example, the value of drag presented to the rotation of knob 10 linearly increases with rotation in one direction, and linearly decreased with rotation in the opposite direction. Consequently, checking the direction of rotation is necessary to determine the appropriate adjustment, if any, that is to be made to the numeric value stored in drag register 146.

Execution of step 188 determines the direction which knob 10 has been rotated, from the algebraic sign of the number present in counter register 148 as previously discussed. If the detected direction of rotation was in a first direction, indicated in FIGURE 9(B) as a value greater than zero, the value stored in drag register 146 is incremented in step 190 to effect an increase in the drag presented to rotation of knob 10. If the detected direction of rotation is in the opposite direction, indicated by the presence in register 148 of a value less than zero, the value stored in drag register 146 is decremented in step 192 to effect a decrease in the drag presented to rotation of knob 10.

After making the appropriate adjustment to the value in drag register 146 by executing steps 190 or 192, the numeric value found in count register 148 is added to the number stored in COUNT in step 194. The result of the addition is a number indicative of the angular position of knob 10.

Next, the current position of knob 10 as determined above is checked in the execution of steps 196 and 198 to see if it is equal to or exceeds the maximum amount of angular rotation in either direction. This is done by comparing the value of COUNT with the corresponding numeric values associated with the desired extremes of rotation. If the condition is found to be true, a maximum torque is produced in a particle brake 72 by the execution of step 200 to cause the storage of the appropriate numeric value in drag register 146 to inhibit further rotation of knob 10. Thereafter, microprocessor will execute step 202 to output to application register 150 the current value, stored in COUNT, which is indicative of the angular position of knob 10. Thereafter, as knob 10 is at an extreme of its permissible rotation, nothing further is to be done, and the microprocessor resets the value in count register 148 to zero by executing step 184 and performs the steps starting with block 210, as more fully described hereinafter.

If the value of COUNT does not equal either of the corresponding numeric values equal to the permissible extremes of rotation when steps 196 and 198 are executed, the microprocessor next checks the value of COUNT against the respective values which are indicative of the position of a detent by executing steps 204 and 206. If agreement is found, the microprocessor executes step 208 to output the appropriate numeric value to drag register 146 to effect the desired rotational resistance in particle brake 72 to indicate the desired detent. If the result of the comparison of the value of COUNT against the values associated with the location of detents when executing steps 198 and 200 does not agree, this indicates that the position of knob 10 is not currently located at an angular position which would correspond to a desired detent positon.

Thereafter, as the value present in COUNT is indicative of the angular position of knob 10, this value is stored in application register 150 by execution of step 202 to produce the corresponding analog voltage 164 to control the particular application of interest.

Thereafter, as the processing of any angular change in position of knob 10 is complete at this point, the value in count register 148 is set to zero in step detected on execution of steps 180 and 182 when the general control routine is again executed upon receipt of an interrupt.

Thereafter, microprocessor 130 executes step 210 to check the status of the input analog voltage on line 123 from the external source. This step and the associated address decode 143, external source input register 147 and analog to digital converter 161 illustrate the example of events from unrelated applications (line 18 in FIGURE 1). The appropriate action in response to an affirmative indication from execution of step 210 (FIGURE 9D) is, for example, the output of a value to drag register 146 to effect a rotational resistance in particle brake 72 (FIGURE 8).

Thereafter, microprocessor 130 executes step 214 to status of input analog voltage on line 121. This step and the associated address decode 121, application input register 145 and analog to digital converter 159 (FIGURE 8B) illustrate the example of events from the system. The appropriate action in response to an affirmative indication resulting from execution of step decision 214 (FIGURE 9(B)) may be, for example, the execution of step 216 to output a value to drag register 146 to effect a rotational resistance in particle brake 72.

On execution of step 216, the microprocessor 130 has completed the processing of any information from knob 10, made the necessary adjustments in the rotational resistance presented by particle brake 72, and made the corresponding adjustment in the analog voltage 164 which would be controlling the particular application of interest, and checked the status of input information from both the application of interest as well as an unrelated application. Thereafter, microprocessor will wait for the next regularly occurring interrupt in step 186, at which point microprocessor 130 will again execute the above described control program.

As it is clear that due to the speed at which microprocessor 130 operates, a considerable amount of time will remain between the completion of the execution of the last task above described and the occurrence of the next interrupt. Consequently, the microprocessor 130 could go on to process other tasks, if desired.

From the foregoing it is likewise clear that the described technique could be further expanded to allow the use of such dynamically interactive responsive control device and system to control unlimited applications, each having different and unique parameters, e.g., drag, detent, end-stops, associated with the operation thereof.

## Claims

1. Apparatus for the input of information from a displaceable device (10) to a controlled system (21) and for the production of information in a tactile form in response to displacement of said device, comprising means (70) for translating information from the displaceable device into signals in a format suitable for communication to the controlled system; and control means (80 - 90) responsive to said signals to produce a control signal for the control of an operating parameter of the system and an output signal which varies according to the position of the device, characterised by electromagnetic means (112, 158; 72) responsive to the output signal for simulating the effect of end stops which determine the limits of displacement of the said device, the electromagnetic means being responsive to the output signal to produce resistance to the displacement of the device in a range between the said limits.

2. Apparatus according to claim 1 in which the electromagnetic means (112, 72) is operable to produce a tactile indication of at least one detent for a position of the device between the said limits.

3. Appparatus according to claim 1 or 2 in which the electromagnetic means (112, 72) is arranged to provide greater resistance for one direction of displacement of the device than for an opposite direction of movement thereof.

4. Apparatus according to any foregoing claim in which the displaceable device (10) is displaceable in rotation.

5. Apparatus according to claim 4 in which the means (70) for translating information comprises a tachometer arranged to provide a first signal denoting increments of rotation of the displaceable device and a second signal denoting the directional sense of the rotation of the device.

6. Apparatus according to claim 5 in which the control means includes counting means (80) controlled by the first and second signal to provide a count denoting the angular position of the device (10) and means (82 - 87) for comparing the count with pre-defined counts in order to generate the output signal or a component thereof.

7. Apparatus according to any foregoing claim in which the electromagnetic means comprises an operational amplifier (112) or digital to analog converter and a particle brake (72).

## Patentansprüche

1. Anlage zur Eingabe von Information von einer verschiebbaren Einrichtung (10) in ein gesteuertes System (21) und Erzeugung von Information in tastbarer Form als Funktion der Verschiebung der Einrichtung mit einer Einrichtung (70) zur Umsetzung von Information von der verschiebbaren Einrichtung in Signale in einem für die Kommunikation mit dem gesteuerten System geeigneten Format und einer von den Signalen angesteuerten Steuereinrichtung (80-90) zur Erzeugung eines Steuersignals für die Steuerung eines Betriebsparameters des Systems und eines Ausgangssignals, das sich als Funktion der Stellung der Einrichtung ändert, gekennzeichnet durch eine vom Ausgangssignals angesteuerte elektromechanische Einrichtung (112, 158; 72) zur Simulation von Endanschlägen, welche die Verschiebungsgrenzen der Einrichtung festlegen, sowie zur Erzeugung eines Widerstandes für die Verschiebung der Einrichtung im Bereich zwischen den Grenzen bei Ansteuerung durch das Ausgangssignal.

2. Anlage nach Anspruch 1, in der die elektromagnetische Einrichtung (112, 72) eine Tastanzeige wenigstens eines Sperrgliedes für eine Stellung der Einrichtung zwischen den Grenzen erzeugt.

3. Anlage nach Anspruch 1 oder 2, in der die elektromagnetische Einrichtung (112, 72) für eine Verschiebungsrichtung der Einrichtung einen größeren Widerstand als für eine entgegengesetzte Bewegungsrichtung erzeugt.

4. Anlage nach den vorhergehenden Ansprüchen, in der die verschiebbare Einrichtung (10) durch Rotation verschiebbar ist.

5. Anlage nach Anspruch 4, in der die Informationsumsetzeinrichtung (70) einen Tachometer umfaßt, der ein Rotationsinkrement der verschiebbaren Einrichtung anzeigendes erstes Signal sowie ein den Rotationsrichtungssinn der Einrichtung anzeigendes zweites Signal erzeugt.

6. Anlage nach Anspruch 5, in der die Steuereinrichtung einen durch das erste und zweite Signal angesteuerten Zähler (80) zur Erzeugung eines die Winkelstellung der Einrichtung (10) anzeigenden Zählwertes sowie eine Einrichtung (82-87) zum Vergleich des Zählwertes mit vordefinierten Zählwerten zur Erzeugung des Ausgangssignals oder einer Komponente davon enthält.

7. Anlage nach den vorhergehenden Ansprüchen, in der die elektromagnetische Einrichtung einen Operationsverstärker (112) oder einen Digital-Analog-Umsetzer und eine Partikelbremse (72) enthält.

**Revendications**

1. Appareil pour l'introduction d'informations à partir d'un dispositif déplaçable (10) dans un système commandé (21) et pour la production d'informations sous forme tactile en réponse au déplacement dudit dispositif, comprenant des moyens (70) servant à traduire les informations en provenance du dispositif déplaçable en signaux suivant un format approprié à la communication au système commandé; et des moyens de commande (80-90) réagissant auxdits signaux pour produire un signal de commande pour commander un paramètre de fonctionnement du système et un signal de sortie qui varie en fonction de la position du dispositif, caractérisé par la présence de moyens électromagnétiques (112, 158; 72) réagissant au signal de sortie pour simuler l'effet de butées d'arrêt qui déterminent les limites de déplacement dudit dispositif, les moyens électromagnétiques réagissant au signal de sortie pour produire une résistance au déplacement du dispositif dans une gamme comprise entre lesdites limites.

2. Appareil selon la revendication 1 dans lequel les moyens électromagnétiques (112, 72) sont aptes à produire une indication tactile d'au moins une détente pour une position du dispositif comprise entre lesdites limites.

3. Appareil selon la revendication 1 ou la revendication 2 dans lequel les moyens électromagnétiques (112, 72) sont disposés de manière fournir une résistance supérieure pour un sens de déplacement du dispositif que pour un sens de déplacement opposé de celui-ci.

4. Appareil selon l'une quelconque des revendications précédentes dans lequel le dispositif déplaçable (10) peut être déplacé en rotation.

5. Appareil selon la revendication 4 dans lequel les moyens (70) servant à traduire les informations comprennent un tachymètre disposé de manière à fournir un premier signal désignant des incréments de rotation du dispositif déplaçable et un second signal désignant le sens de rotation du dispositif.

6. Appareil selon la revendication 5 dans lequel les moyens de commande comprennent des moyens de comptage (80) commandés par les premier et second signaux pour fournir un comptage désignant la position angulaire du dispositif (10) et des moyens (82 - 87) servant à comparer le comptage à des comptages pré-définis afin de générer le signal de sortie ou une composante de celui-ci.

7. Appareil selon l'une quelconque des revendications précédentes dans lequel les moyens électromagnétiques comprennent un amplificateur opérationnel (112) ou un convertisseur numérique-analogique et un frein à particules (72).

FIG_1

FIG_2

FIG_3

FIG_4

FIG_5

FIG_6

FIG_7

EP 0 323 878 B1

MICROPROCESSOR      INTERRUPT ← 30Hz
                                                    136

READ/WRITE'

132    134          130

138

142
ADDRESS DECODE

154

70       72      10
TACHOMETER   PARTICLE BRAKE   KNOB

32   30

LATCH COUNT REGISTER    COUNT

40   34

DIRECTION    D    CK

146

140
ADDRESS DECODE

148

146    152

LATCH DRAG REGISTER

158
DIGITAL TO ANALOG CONVERTER

162

ADDRESS BUSS   DATA BUSS

144
ADDRESS DECODE

150    156

LATCH APPLICATION OUTPUT REGISTER

160
DIGITAL TO ANALOG CONVERTER

164
ANALOG VOLTAGE TO CONTROL APPLICATION

TO FIGURE 8B         TO FIG 8B

FIG_8  1 of 2

FROM FIGURE 8A

ADDRESS BUSS 132

DATA BUSS 134

FROM FIG. 8A

READ/WRITE'

ADDRESS DECODE 141

153

LATCH 145

APPLICATION INPUT REGISTER

ANALOG TO DIGITAL CONVERTER 159

121 INPUT ANALOG VOLTAGE FROM APPLICATION

ADDRESS DECODE 143

155

LATCH 147

EXTERNAL SOURCE INPUT REGISTER

ANALOG TO DIGITAL CONVERTER 161

123 INPUT ANALOG VOLTAGE FROM EXTERNAL SOURCE UNRELATED TO APPLICATION

FIG_8 2 of 2

START

170

SET COUNT = 0

172

STORE ZERO
IN COUNT REGISTER 148

174

STORE ZERO IN
DRAG REGISTER 146

WAIT FOR INTERRUPT

FIG_9A

INTERRUPT
— 180

READ VALUE OF COUNT REGISTER 148

— 182
IS VALUE OF COUNT REGISTER 148 EQUAL TO ZERO ?
— YES

NO

— 188
DETERMINE DIRECTION OF ROTATION
— >0

— 190
INCREMENT VALUE IN DRAG REGISTER 146

<0 — 192
DECREMENT VALUE IN DRAG REGISTER 146

— 194
ADD VALUE OF COUNT REGISTER 148 TO VALUE STORED IN COUNT

— 196
IS VALUE OF COUNT ≥ UPPER LIMIT ?
— YES

NO

— 198
IS VALUE OF COUNT ≤ LOWER LIMIT ?
— YES

NO

— 200
OUTPUT VALUE TO DRAG REGISTER 146 TO INHIBIT FURTHER ROTATION

① ② ③

FIG_9B 1 of 3

18

EP 0 323 878 B1

FIG_9B 2 of 3

19

```
                                            ⟨4⟩
                                             │
                                             ▼
                                          ╱────────╲
                                        ╱  IS        ╲  ___210
                                      ╱   INDICATION    ╲
                   YES              ╱   FROM EXTERNAL     ╲
         ┌───────────────────────── ╲  SOURCE UNRELATED  ╱
         │          ___212             ╲  TO APPLICATION ╱
         ▼                               ╲   PRESENT   ╱
┌──────────────────┐                       ╲    ?    ╱
│  OUTPUT VALUE TO │                         ╲─────╱
│ DRAG REGISTER 146│                           │ NO
└──────────────────┘                           │
         │                                      │
         └──────────────────────────────────────┤
                                                 │
                                                 ▼
                                            ╱─────────╲
                                          ╱   DOES      ╲ ___214
                                        ╱  INPUT ANALOG   ╲
                   YES               ╱   VOLTAGE FROM       ╲
         ┌──────────────────────────╲ APPLICATION INDICATE ╱
         │          ___216            ╲ ACTION REQUIRED   ╱
         ▼                              ╲      ?        ╱
┌──────────────────┐                      ╲──────────╱
│ PERFORM INDICATED│                          │ NO
│     ACTION       │                          │
└──────────────────┘                          │
         │                                     │
         └─────────────────────────────────────┤
                                                │
                                                ▼       ___186
                                      ┌──────────────────────┐
                                      │  WAIT FOR INTERRUPT  │
                                      └──────────────────────┘
```

FIG_9B 3 of 3

20